Europäisches Patentamt

European Patent Office

Office européen des brevets

(11) Publication number: **0 276 828**
**A1**

## EUROPEAN PATENT APPLICATION

(21) Application number: **88101163.9**

(22) Date of filing: **27.01.88**

(51) Int. Cl.⁴ **C08L 77/00** , C08L 23/02 ,
C08L 23/08 , C08L 51/06

(30) Priority: **27.01.87 US 7254**

(43) Date of publication of application:
**03.08.88 Bulletin 88/31**

(84) Designated Contracting States:
**BE DE FR GB IT LU NL SE**

(71) Applicant: **E.I. DU PONT DE NEMOURS AND COMPANY**
**Legal Department 1007 Market Street**
**Wilmington Delaware 19898(US)**

(72) Inventor: **Latham, Roger Alan**
**37 Rue Jacques Dolphin**
**CH-1227, Carouge(CH)**

(74) Representative: **Abitz, Walter, Dr.-Ing. et al**
**Abitz, Morf, Gritschneder, Freiherr von**
**Wittgenstein Postfach 86 01 09**
**D-8000 München 86(DE)**

(54) **Thermoplastic polyamide/ionomer/glass blends.**

(57) Thermoplastic blends of semi-crystalline polyamides, very low modulus ionomers, and glass fiber, where the ratio of polyamide to ionomer is 0.9-1.3 and the weight percent glass is 5-12, are characterized by a unique combination of high toughness and high heat distortion temperature.

EP 0 276 828 A1

## THERMOPLASTIC POLYAMIDE/IONOMER/GLASS BLENDS

### Technical Field

This invention relates to certain thermoplastic compositions which possess a unique combination of improved properties.

Polyamides, by themselves, generally have good elongation properties. When polyamides have been combined with other components to improve ductile properties, such as resistance to crack propagation. the resulting combinations generally exhibit useful properties at room temperature, but superior properties at elevated temperatures are not achieved, thereby making such combinations unsuitable for applications such as automotive under the hood use. The present invention combines semi-crystalline polyamide resin, very low modulus ionomer, and glass fibers to yield a thermoplastic blend that has superior notched Izod (toughness) values, excellent elongation at break, and high heat distortion temperature. The stiffness and toughness of the blend can be increased or decreased through careful control of the quantity of ionomer or the quantity of glass fiber.

The compositions of the present invention have potential for use in a wide range of applications. For example, the combination of high toughness and high heat distortion temperature suggests utility for these compositions in machinery and appliance housings, exterior automotive parts that would be subjected to conventional paint bake ovens, e.g., fenders. rocker panels, air dams, valence panels, mirror frames and license plate brackets, as well as components intended for under hood use.

### Background Art

U.S. Patent 3,845,163. granted October 29, 1974 to Murch, discloses thermoplastic polymer blends having improved weld-line toughness. These blends consist of a polyamide resin, optional filler, and an ionomer that is a two component copolymer of ethylene and an alpha,beta-ethylenically unsaturated carboxylic acid wherein at least 10% of the acid groups have been neutralized with metal ions. Murch does not contemplate the addition of a third component, namely, a softening comonomer such as n-butyl acrylate, to the ionomer. Further, Murch prefers blends containing 60-85 weight percent polyamide.

Japanese Patent Publication 56-55442, published May 16, 1981 by Y. Fujita et al., describes a resin composition consisting of (1) a polyamide resin and (2) a copolymer derived from ethylene, metal neutralized carboxylic acid, unneutralized acid, and ester. These blends are used to improve toughness, heat sealability, and bondability of polyamide resins. It is essential that the melting point of the polyamide resin used by Fujita be less than 160°C, else the desired improvements will not be attained. Fujita further discloses that at a 50:50 mixture of polyamide/copolymer, the blend is non-solid and is good for use as an adhesive. The compositions of the present invention employ polyamide resins with melting points greater than 160°C, and at equal amounts of polyamide/ionomer, the resultant product will remain tough and stiff at temperatures as high as 220°C.

U.S. Patent 4,174,358, granted November 13, 1979 to Epstein, discloses a toughened multiphase thermoplastic composition consisting essentially of a polyamide matrix resin and at least one other polymer. The term "at least one other polymer" is generically defined as being derived, in random order, from any combination of eight classes of monomers. Included within these classes are ethylene, methacrylic acid, and butyl acrylate. There is nothing, however, in Epstein to suggest the particular selection of these monomers to make the ionomer used in the compositions of the present invention. Although Epstein's Examples use ethylene/iso-butyl acrylate/methacrylic acid terpolymers, no Examples use the corresponding n-butyl acrylate containing polymer. In addition, Epstein limits the weight percent of polyamide in the invention to 60-99% by weight.

U.S. Patent 4,404,325, granted September 13, 1983 to Mason et al., describes high impact resistant polyamide compositions consisting of a polyamide resin, ionic copolymer, and ester copolymer. Mason discloses many different iononic copolymers as being suitable, including those disclosed by Epstein (U.S. Patent 4,174,358), but Mason does not exemplify or otherwise specifically contemplate the ionomers used in the compositions of the present invention. In addition, Mason discloses compositions containing a maximum of 44% by weight of ionic copolymer.

Disclosure of the Invention

This invention relates to certain thermoplastic compositions which possess a unique combination of properties, including high toughness, as measured by both elongation and notched Izod, and high heat distortion temperature. In particular, this invention relates to thermoplastic compositions which are blends of semi-crystalline polyamides, ionomers and glass fiber. More specifically, the compositions of the present invention comprise melt blends of:

(a) at least one thermoplastic semi-crystalline polyamide having a melting point of at least 160°C,

(b) at least one ionic copolymer derived from the reaction of ethylene, at least one unsaturated carboxylic acid and at least one softening comonomer, said softening comonomer being capable of forming a homopolymer that has a glass transition temperature of less than -40°C, said ionic copolymer being from 3-90% neutralized with a metal ion selected from groups Ia, Ib, IIa, IIb, IIIa, IVa, VIb and VIII of the Periodic Table of the Elements, and

(c) glass fiber, where the weight ratio of (b) to (a) will be from 0.9 to 1.3 and the quantity of glass fiber will be from 2-20 weight percent of the total composition. As an alternative to specifying the weight ratio of components (a) and (b), one can specify the relative weight percent. Thus, by calculation from the weight ratios specified above, the compositions of the present invention will contain 47.4-56.5 weight percent ionic copolymer, and 52.6-43.5 weight percent polyamide, these percentages being based on the total quantity of components (a) and (b) only.

Preferred compositions of the present invention comprise melt blends of the above-mentioned polyamide, ionic copolymer and glass fiber where the weight ratio of ionic copolymer to polyamide is 0.95-1.15 (48.7-53.5 weight percent ionic copolymer, 51.3-46.5 weight percent polyamide) and the quantity of glass fiber is 5-12 weight percent of the total composition.

Most preferred compositions of the present invention comprise melt blends of the above-mentioned polyamide, ionic copolymer and glass fiber where the weight ratio of ionic copolymer to polyamide is 1.0-1.1 (50-52.4 weight percent ionic copolymer, 50-47.6 weight percent polyamide) and the quantity of glass fiber is 8-10 weight percent of the total compositions.

The components described above are melt blended with each other under high shear. The various ingredients may first be combined with one another in what is commonly referred to as a "salt and pepper" blend, i.e., a pellet blend, of each of the ingredients, or they may be combined with one another via simultaneous or separate metering of the various ingredients into an extruder, Banbury, Ferrell continuous mixer, or other mixing equipment and then mixing such ingredients under high shear conditions. The high shear insures proper dispersion of all the components.

With respect to the various ingredients that are used to prepare the compositions of the present invention, suitable polyamides comprise thermoplastic semi-crystalline polymers having recurring amide units within the polymer chain, which polymers have crystalline melting points at least 160°C.

The semi-crystalline polyamides are well known in the art. They have a molecular weight over 10,000 and can be produced by condensation of equimolar amounts of a saturated aliphatic dicarboxylic acid containing from 4-12 carbon atoms with an aliphatic diamine containing 2-12 carbon atoms, in which the diamine can be employed, if desired, to provide an excess of amine end groups over carboxy end groups in the polyamide. Vice versa, the diacid can be used to provide an excess of acid groups. Equally well, these polyamides may be made from acid-forming and amine-forming derivatives of said acids and amines such as esters, acid chlorides, amine salts, etc. Representative aliphatic dicarboxylic acids used to make the polyamides include adipic acid, pimelic acid, azelaic acid, suberic acid, sebacic acid, and dodecanedioic acid, while representative aliphatic diamines include hexamethylene diamine and octamethylenediamine. In addition, these polyamides can also be prepared from lactams. Examples of polyamides include polyhexamethylene adipamide (66 nylon), polyhexamethylene azelamide (69 nylon), polyhexamethylene sebacamide (610 nylon), and polyhexamethylene dodecanoamide (612 nylon), or polyamides produced by ring opening of lactams: i.e., polycaprolactam (6 nylon) and polylauryl lactam (12 nylon). It is also possible to use polyamides prepared by the polymerization of at least two of the amines of acids used to prepare the above polymers, as for example, a polymer made of adipic acid, and sebacic acid and hexamethylene diamine. Blends of polyamides, such as a mixture of 66 nylon and 6 nylon are also included as are copolymers such as nylon 66/6. Preferably the condensation polyamide employed herein is polyhexamethylene adipamide (66 nylon), or a blend of polyhexamethylene adipamide (66 nylon) and polycaprolactam (6 nylon).

Suitable ionic copolymers comprise copolymers derived from the reaction of ethylene, unsaturated carboxylic acids of 3-8 carbon atoms and at least one softening monomer, said softening comonomer being capable of forming a homopolymer that has a glass transition temperature of less than -40°C, said ionic copolymer of ethylene having from about 3 to about 90% of the carboxylic acid groups ionized by neutralization with metal ion selected from groups Ia, Ib, IIa, IIb, IIIa, IVa, VIb and VIII of the Periodic Table of Elements.

The ionic copolymers will contain from about 70 to about 99.2 mole % of ethylene, from about 0.35 to about 12 mole % of unsaturated carboxylic acid, and from about 0.45 to about 12 mole percent of softening comonomer. Preferably, the ionic copolymer will contain from about 77 to about 98.25 mole % ethylene, from about 1 to about 9.5 mole % unsaturated carboxylic acid, and from about 0.75 to about 9.0 mole % softening comonomer. Most preferably, the ionic copolymer will contain from about 81 to about 96.8 mole % ethylene, from about 2.0 to about 9.0 mole % unsaturated carboxylic acid, and from about 1.2 to about 7 mole % softening comonomer.

Preferred ionic copolymers will be those where the unneutralized carboxylic acid is selected from acrylic acid and methacrylic acid, most preferably methacrylic acid, and where the softening comonomer is selected from alkyl esters of acrylic acid, further where the alkyl ester is selected from 2-ethoxyethyl, 2-ethylbutyl, 2-methoxyethyl, 3-ethoxypropyl, 3-methoxybutyl, 4-thiapentyl, 3-methoxypropyl, n-butyl, n-hexyl, n-heptyl and n-octyl acrylate. The most preferred softening comonomer is n-butyl acrylate.

In addition to the ingredients discussed above, the compositions of the present invention can contain other ingredients as are conventional in the compounding of polyamides and/or ionic copolymers. Examples of such other ingredients include flow enhancers (e.g., zinc stearate, aluminum distearate or stearic acid), hindered phenolic antioxidants (e.g., N,N'-hexamethylene-bis-(3,5-di-tert-butyl-4-hydroxyhydrocinnamamide, and 4,4'-thiobis(3-methyl-6-tert-butyl phenol)), plasticizers, lubricants, mold release agents, slip agents, pigments, UV stabilizers (e.g., carbon black, substituted resorcinols, salicylates, benzotriazoles, and benzophenones), and heat stabilizers. In addition, other fillers, including glass beads, glass flake, mineral, clay and silica, can be included; however, glass fiber provides compositions with optimum properties, e.g., stiffness, without other fillers present.

In the following examples, the various samples were prepared by first blending preweighed quantities of polyamide pellets, ionomer pellets, antioxidant, glass fiber, and optional additives in polyethylene bags. The pellet blends were then extruded on a 2-inch Sterling single screw extruder, equipped with a 63 inch long two-stage screw. The extruder hopper was blanketed with nitrogen. The rear barrel sections and the die were set at 270°C. Screw speed was 75 rpm. Vacuum was applied at the second stage of the screw. The strands exiting the die were quenched in water, pelletized and dried overnight in a vacuum oven at 80°C. Mold release agent, when used, was coated on the pellets. The dry pellets were molded into standard test bars on a 6 oz. VanDorn screw injection molding machine. Barrel sections were set at 290°C. Mold surface temperatures of 30-90°C were used. Test bars were molded with a 20 sec. injection/25 sec. hold cycle, fast injection, and 60 rpm screw speed.

In the following examples, tensile strength at yield and elongation at break were determined according to ASTM D638. Flexural modulus was determined (1/8" thick specimens) according to ASTM D790. Notched Izod impact (1 8" thick specimens) was determined according to ASTM D256. The type of break is noted in the examples and conforms to definitions in ASTM D256, namely:

C = complete break - wherein the specimen separates into two or more pieces.

H = hinge break - an incomplete break such that one part of the specimen cannot support itself above the horizontal when the other part is held vertically.

P = partial break - an incomplete break that is not a hinge break but has fractured at least 90 percent of the distance between the vertex of the notch and the opposite side.

N = non-break - an incomplete break that does not meet the definition for a hinge break but has fractured less than 90 percent of the distance between the vertex of the notch and the opposite side.

M = mixed breaks - some of the samples have complete breaks and some have partial breaks.

Heat deflection temperature (1 8" x 1 2" cross section) was determined according to ASTM D648. In the sag test standard flex bars (5" x 1 2" x 1 8") were clamped horizontally at one end in an aluminum holder such that the bar extended 4 inches from the edge of the clamp and the 5" x 1 2" surface of the bar was in the horizontal plane. The original height of the "free" bar end above the base of the holder was measured. The specimen and holder were then heated for 1 hr. at 180°C in a circulating air oven. The specimen and holder were cooled to room temperature. The height of the free bar end from the base of the holder was measured again. The decrease in height in mm is reported as "sag".

It is well known that moisture content affects many physical properties of polyamides and blends containing polyamides. Therefore, in all of the Examples, the specimens were tested, as noted, in one or both of the following conditions:

(a) DAM: dry as molded and containing less than approximately 0.2% water, or

(b) 50% RH: following conditioning to 50% relative humidity.

Melt viscosity data were obtained in a constant rate rheometer at 280°C.

In the following examples, various ionomers were used, as follows:

Ionomer A was a terpolymer of 69.5% (by weight) ethylene, 8.5% methacrylic acid, and 22.0% n-butyl acrylate, neutralized ca 70% with zinc to a melt index of 0.1-0.3 g/10 min (via ASTM D1238, Condition E).

Ionomer B was a terpolymer of 69.5% (by weight) ethylene, 8.5% methacrylic acid, and 22.0% n-butyl acrylate, neutralized ca 42% with zinc to a melt index of 2.0g/10 min (via ASTM D1238, Condition E).

Ionomer C was a terpolymer of 62% (by weight) ethylene, 10% methacrylic acid, and 28% n-butyl acrylate, neutralized ca 50% with zinc to a melt index of 0.1 g/10 min (via ASTM D1238, Condition E).

Ionomer D was a terpolymer of 66.9% (by weight) ethylene, 8.6% methacrylic acid, and 24.5% n-butyl acrylate, neutralized ca 85% with zinc to a melt index of 0.1 (via ASTM D1238, Condition E).

Ionomer E was a terpolymer of 69.5% (by weight) ethylene, 8.5% methacrylic acid, and 22% n-butyl acrylate, neutralized ca 53% with sodium to a melt index of 0.9 g/10 min (via ASTM D1238, Condition E).

Ionomer F was a copolymer of 90% (by weight) ethylene and 10% methacrylic acid, neutralized ca 71% with zinc, to a melt index of 1.2 g/10 min (via ASTM D1238, Condition E).

Ionomer G was a terpolymer of 80% (by weight) ethylene, 10% methacrylic acid, and 10% iso-butyl acrylate, neutralized ca 73% by zinc, to a melt index of 1.2 g/10 min (via ASTM D1238, Condition E).

In the following examples, various polyamides were used, as follows:

Polyamide A was a 66 nylon with a relative viscosity of 50-54 as measured in formic acid (via ASTM D789).

Polyamide B was a 6 nylon with a relative viscosity of 78 as measured in formic acid (via ASTM D789).

Polyamide C was a 66/6 nylon copolymer (85/15% weight ratio) with a relative viscosity of 52 as measured in formic acid (via ASTM D789).

Polyamide D was a 612 nylon with an inherent viscosity of 0.98 measured as a solution of 0.5 g polymer in 100 ml of m-cresol at 25°C.

In the following examples, the glass fiber used when chopped fiber glass strand, cut length 1/8 inch, 13.2 micrometer nominal fiber diameter.

In the following examples, various antioxidants were used, as follows:

Antioxidant A was 4,4'-thiobis(3-methyl-6-tertiary butyl phenol).

Antioxidant B was N,N'-hexamethylene bis(3,5-ditertiary butyl-4-hydroxy-hydrocinnamamide).

In the following examples, various other additives were used, as follows:

Other Additive A was stearic acid.

Other Additive B was zinc stearate.

Other Additive C was an extruded carbon black concentrate, containing 28% carbon black, 71% zinc ionomer (Ionomer F, above), and 1% antioxidant tetrakis[methylene 3-{3',5'-di-tert-butyl-4'-hydroxyphenyl}propionate]methane. It should be understood that, while the above-described concentrate provides a convenient mechanism for incorporating carbon black into the compositions of the present invention, this concentrate includes ionomer that does not contain any softening monomer. Accordingly, excessive quantities of such concentrates should be avoided to prevent over-dilution of the very low modulus ionomers used in the compositions of the present invention, and the concomitant diminishment of the beneficial effects of such very low modulus ionomers.

In the following Examples, all parts and percentages are by weight unless stated otherwise. In addition, all values originally obtained in British units have been converted to S.I. units and rounded, where appropriate.

Examples 1 through 22 are each derived from nylon 66 and a zinc ionomer of an ethylene-methacrylic acid/n-butyl acrylate terpolymer. Examples 1 through 4 each contain 50.1 to 50 relative % by weight ionomer. Glass fiber content increased from 3 to 12%. As the glass content increases, in general flexural modulus and yield strength increase while elongation at break and notched Izod impact strength decrease. The combinations of yield strength, elongation at break, stiffness, and impact properties are attractive.

Examples 5 through 8 contain a higher relative percentage loading of the ionomer (51.2 relative %). Useful combinations of yield strength, elongation at break, stiffness, and impact strength are retained. Example 7 (with 10% glass) has better notched Izod impact toughness than Example 3 (10% glass, but 50.1 relative % ionomer) but retains useful stiffness and heat distortion temperature. Tje relative concentration of ionomer increases further in Examples 9 and 10, in which the heat distortion temperature is still 114°C or more at 455 KPa.

Examples 11 through 22 contain either stearic acid (Other Ingredient A) or zinc stearate (Other Ingredient B) as flow enhancers. The ionomer concentration varies from 47.7 to 52.4 relative %, and glass content varies from 3 to 20%. All of the examples retain useful combinations of properties. Example 18 is a preferred composition (10% glass fiber; 51.1 relative % ionomer; 1% zinc stearate).

Examples 23 through 28 are derived from the same zinc ionomer of an ethylene/methacrylic acid/n-butyl acrylate terpolymer as the preceding examples, but the polyamides vary. Examples 23 and 24 were prepared from nylon 6. Examples 25 and 26 were prepared from mixtures of nylons 6 and 66. Examples 27 and 28 employed a nylon 6/66 copolymer. Two blends (Examples 24 and 28) contain stearic acid as a flow enhancer.

Examples 29 through 32 each contain nylon 66, 10% fiber glass, and 512.1 or 50 relative % ionomer. Examples 29 through 31 each employ a zinc ionomer of an ethylene/methacrylic acid/n-butyl acrylate terpolymer, but these three ionomers are different from that used in Examples 1 through 28. Example 32 employs a sodium ionomer of an ethylene/methacrylic acid/n-butyl acrylate terpolymer.

Examples 33 and 34 and Comparative Examples 1-4 are each derived from 66 nylon and each contain 10% glass fiber, 0.5% antioxidant, and either 50 or 55 relative % ionomer. Examples 33 and 34 employ a zinc ionomer of an ethylene/methacrylic acid/n-butyl acrylate terpolymer. Heat distortion temperatures at 455 KPa are >228 and 174°C, respectively, at 50 and 55 relative % ionomer content. Comparative Examples 1 and 2 employ a zinc ionomer of an ethylene/methacrylic acid copolymer. At 50 relative % ionomer concentration (Comparative Example 1) the elongation at break is only 5%. Increasing the ionomer concentration to 55 relative % increased the elongation at break to only 7%, much poorer than found in either Example 33 or 34. At the high ionomer concentration, the heat distortion temperature fell to 124°C at 455 KPa (Comparative Example 2). With the zinc ionomer of an ethylene/methacrylic acid copolymer it is impossible to attain the attractive combinations of high heat distortion temperature, high elongation at break, and high notched Izod impact strength that can be obtained with zinc ionomers of ethylene/methacrylic acid/n-butyl acrylate terpolymer. Comparative Examples 3 and 4 are analogous blends derived from a zinc ionomer of an ethylene/methacrylic acid/i-butylacrylate terpolymer. With this ionomer it is again impossible to attain the attractive combinations of high heat distortion temperature, high elongation at break, and high notched Izod impact strength that were obtained in Examples 33 and 34 with the zinc ionomer of an ethylene/methacrylic acid/n-butyl acrylate terpolymer. Example 35 illustrates the invention where the polyamide is 612 nylon. Examples 36 and 37 illustrate the addition of carbon black concentrate.

TABLE I

| Example Number | 1 | 2 | 3 | 4 |
|---|---|---|---|---|
| Ionomer | A | A | A | A |
| % Ionomer | 48.5 | 47.5 | 45 | 43.75 |
| Polyamide | A | A | A | A |
| % Polyamide | 48.35 | 47.35 | 44.85 | 43.75 |
| % Fiber Glass | 3 | 5 | 10 | 12 |
| Antioxidant | A | A | A | B |
| % Antioxidant | 0.15 | 0.15 | 0.15 | 0.5 |
| Other Ingredients | -- | -- | -- | -- |
| % Other Ingredients | 0 | 0 | 0 | 0 |
| Rel. % Ionomer/ Rel % Polyamide | 50.1/49.9 | 50.1/49.9 | 50.1/49.9 | 50.0/50.0 |
| **Yield Strength, MPa** | | | | |
| DAM | 36.9 | 43.3 | 51.6 | 49.6 |
| 50% RH | 29.9 | 33.3 | 40.6 | 38.5 |
| **Elong. at Break, %** | | | | |
| DAM | 80 | 50 | 30 | 20 |
| 50% RH | 110 | 100 | 40 | 30 |
| **Notched Izod, J/m** | | | | |
| DAM at 23°C | 1075(NB) | 865(P) | 480(P) | 440(P) |
| 50% RH at 23°C | 1005(NB) | 885(NB) | 560(P) | 525(P) |
| DAM at 0°C | 855(NB) | 580(P) | 315(P) | -- |
| 50% RH at 0°C | -- | -- | -- | -- |
| DAM at -29°C | 640(P) | 515(P) | 255(P) | 180(P) |
| 50% RH at -29°C | -- | -- | -- | 90(P) |
| **Flexural Modulus, MPa** | | | | |
| DAM | 1150 | 1420 | 1870 | 1940 |
| 50% RH | 660 | 821 | 1160 | 1080 |
| **HDT, °C** | | | | |
| at 455 KPa | -- | 172 | >200 | 234 |
| at 1820 KPa | 56 | -- | 72 | 67 |
| **Sag, mm** | | | | |
| DAM | 2 | 2 | 2 | 1 |
| 50% RH | 1 | 1 | 1 | 0 |
| **Melt Viscosity, Pa at 280°C and 100/sec shear** | | | | |
| rate | 1300 | 1200 | -- | -- |
| 1000/sec shear rate | 340 | 300 | -- | -- |
| % water in sample | 0.22 | 0.16 | -- | -- |

## TABLE I (Continued)

| Example Number | 5 | 6 | 7 | 8 |
|---|---|---|---|---|
| Ionomer | A | A | A | A |
| % Ionomer | 47 | 47 | 45.75 | 45 |
| Polyamide | A | A | A | A |
| % Polyamide | 44.85 | 44.85 | 43.75 | 42.85 |
| % Fiber Glass | 8 | 8 | 10 | 12 |
| Antioxidant | A | B | B | A |
| % Antioxidant | 0.15 | 0.15 | 0.5 | 0.15 |
| Other Ingredients | -- | -- | -- | -- |
| % Other Ingredients | 0 | 0 | 0 | 0 |
| Rel. % Ionomer/ Rel % Polyamide | 51.2/48.8 | 51.2/48.8 | 51.1/48.9 | 51.2/48.8 |
| **Yield Strength, MPa** | | | | |
| DAM | 48.2 | 46.3 | 43.6 | 52.7 |
| 50% RH | 36.8 | 35.9 | 35.8 | -- |
| **Elong. at Break, %** | | | | |
| DAM | 40 | 35 | 20 | 15 |
| 50% RH | 80 | 60 | 40 | 40 |
| **Notched Izod, J/m** | | | | |
| DAM at 23°C | 610(P) | 620(P) | 555(P) | 425(P) |
| 50% RH at 23°C | 735(P) | 705(P) | 620(P) | -- |
| DAM at 0°C | 420(P) | 415(P) | 350(P) | -- |
| 50% RH at 0°C | -- | -- | 305(P) | -- |
| DAM at -29°C | 365(P) | 325(P) | 205(P) | 190(P) |
| 50% RH at -29°C | -- | -- | 150(P) | -- |
| **Flexural Modulus, MPa** | | | | |
| DAM | 1650 | 1620 | 1450 | 1890 |
| 50% RH | 986 | 1000 | 1010 | 1190 |
| **HDT, °C** | | | | |
| at 455 KPa | >178 | >188 | 212 | >200 |
| at 1820 KPa | 62 | 62 | -- | 73 |
| **Sag, mm** | | | | |
| DAM | 1 | 2 | -- | -- |
| 50% RH | 2 | 1 | 0 | -- |
| **Melt Viscosity, Pa at 280°C and** | | | | |
| 100/sec shear rate | 1600 | -- | 1800 | 1900 |
| 1000/sec shear rate | 370 | -- | 420 | 400 |
| % water in sample | 0.18 | -- | 0.01 | 0.04 |

## TABLE I (Continued)

| Example Number | 9 | 10 | 11 | 12 |
|---|---|---|---|---|
| Ionomer | A | A | A | A |
| % Ionomer | 50 | 50 | 41 | 48.25 |
| Polyamide | A | A | A | A |
| % Polyamide | 44.85 | 39.85 | 45 | 48.1 |
| % Fiber Glass | 5 | 10 | 12 | 3 |
| Antioxidant | A | A | B | B |
| % Antioxidant | 0.15 | 0.15 | 0.5 | 0.15 |
| Other Ingredients | -- | -- | A | A |
| % Other Ingredients | 0 | 0 | 1.5 | 0.5 |
| Rel. % Ionomer/ Rel % Polyamide | 52.7/47.3 | 55.7/44.3 | 47.7/52.3 | 50.1/49.9 |
| **Yield Strength, MPa** | | | | |
| DAM | 39.9 | 45 | 49.6 | 36.3 |
| 50% RH | 29 | 32.6 | 38.1 | 28.1 |
| **Elong. at Break, %** | | | | |
| DAM | 80 | 40 | 10 | 85 |
| 50% RH | 120 | 60 | 25 | 150 |
| **Notched Izod, J/m** | | | | |
| DAM at 23°C | 995(NB) | 615(P) | 330(P) | 1025(NB) |
| 50% RH at 23°C | 865(NB) | 645(P) | 365(P) | 935(NB) |
| DAM at 0°C | -- | -- | -- | -- |
| 50% RH at 0°C | -- | -- | -- | -- |
| DAM at -29°C | -- | -- | 110(M) | -- |
| 50% RH at -29°C | -- | -- | 65(M) | -- |
| **Flexural Modulus, MPa** | | | | |
| DAM | 1200 | 1480 | 2290 | 1230 |
| 50% RH | 807 | 1030 | 1340 | 660 |
| **HDT, °C** | | | | |
| at 455 KPa | 114 | 136 | 231 | -- |
| at 1820 KPa | 56 | 58 | 77 | 54 |
| **Sag, mm** | | | | |
| DAM | -- | -- | 0 | 4 |
| 50% RH | -- | -- | 0 | 2 |
| **Melt Viscosity, Pa at 280°C and** | | | | |
| 100/sec shear rate | 1900 | -- | -- | 800 |
| 1000/sec shear rate | 440 | -- | -- | 220 |
| % water in sample | 0.02 | -- | -- | 0.26 |

TABLE I (Continued)

| Example Number | 13 | 14 | 15 | 16 |
|---|---|---|---|---|
| Ionomer | A | A | A | A |
| % Ionomer | 44.5 | 43 | 39 | 46.6 |
| Polyamide | A | A | A | A |
| % Polyamide | 44.35 | 43 | 39 | 44.5 |
| % Fiber Glass | 10 | 12 | 20 | 8 |
| Antioxidant | A | B | B | B |
| % Antioxidant | 0.15 | 0.5 | 0.5 | 0.15 |
| Other Ingredients | A | A | A | A |
| % Other Ingredients | 1 | 1.5 | 1.5 | 0.8 |
| Rel. % Ionomer/ Rel % Polyamide | 50.1/49.9 | 50/50 | 50/50 | 51.2/48.8 |
| Yield Strength, MPa | | | | |
| DAM | 46.2 | 45.4 | 56.2 | 45.2 |
| 50% RH | 37.4 | 35.9 | 44.5 | 32.8 |
| Elong. at Break, % | | | | |
| DAM | 20 | 15 | 5 | 30 |
| 50% RH | 45 | 40 | 10 | 100 |
| Notched Izod, J/m | | | | |
| DAM at 23°C | 390(P) | 370(P) | 245(P) | 625(P) |
| 50% RH at 23°C | 450(P) | 415(P) | 225(P) | 735(NB) |
| DAM at 0°C | -- | -- | -- | -- |
| 50% RH at 0°C | -- | -- | -- | -- |
| DAM at -29°C | -- | 135(P) | 140(P) | -- |
| 50% RH at -29°C | -- | 65(P) | 80(M) | -- |
| Flexural Modulus, MPa | | | | |
| DAM | 2010 | 2010 | 2830 | 1620 |
| 50% RH | 1300 | 1240 | 1890 | 1000 |
| HDT, °C | | | | |
| at 455 KPa | >200 | 194 | -- | -- |
| at 1820 KPa | 70 | 70 | 86 | 61 |
| Sag, mm | | | | |
| DAM | 2 | 0 | 0 | 4 |
| 50% RH | 0 | 0 | 0 | 2 |
| Melt Viscosity, Pa at 280°C and | | | | |
| 100/sec shear rate | 1200 | -- | -- | 770 |
| 1000/sec shear rate | 300 | -- | -- | 200 |
| % water in sample | 0.02 | -- | -- | 0.24 |

### TABLE I (Continued)

| Example Number | 17 | 18 | 19 | 20 |
|---|---|---|---|---|
| Ionomer | A | A | A | A |
| % Ionomer | 45 | 45.25 | 44.25 | 42.5 |
| Polyamide | A | A | A | A |
| % Polyamide | 43 | 43.25 | 42.25 | 40.5 |
| % Fiber Glass | 10 | 10 | 12 | 15 |
| Antioxidant | B | B | B | B |
| % Antioxidant | 0.5 | 0.5 | 0.5 | 0.5 |
| Other Ingredients | A | B | B | A |
| % Other Ingredients | 1.5 | 1 | 1 | 1.5 |
| Rel. % Ionomer/ Rel % Polyamide | 51.5/48.9 | 51.1/48.9 | 51.1/48.9 | 51.2/48.8 |
| **Yield Strength, MPa** | | | | |
| DAM | 39.4 | 44.5 | 47.8 | 48.5 |
| 50% RH | 29.4 | 36 | 38.5 | 37.5 |
| **Elong. at Break, %** | | | | |
| DAM | 50 | 20 | 15 | 10 |
| 50% RH | 120 | 55 | 20 | 20 |
| **Notched Izod, J/m** | | | | |
| DAM at 23°C | 470(P) | 470(P) | 350(P) | 325(P) |
| 50% RH at 23°C | 555(P) | 515(P) | 425(P) | 340(P) |
| DAM at 0°C | 395(P) | 295(P) | 265(P) | 300(P) |
| 50% RH at 0°C | 225(P) | 225(P) | 190(P) | 185(P) |
| DAM at -29°C | -- | 160(M) | 150(M) | -- |
| 50% RH at -29°C | 130(C) | 130(M) | 130(M) | 115(M) |
| **Flexural Modulus, MPa** | | | | |
| DAM | 1430 | 1480 | 1650 | 1700 |
| 50% RH | 1050 | 1120 | 1280 | 1430 |
| **HDT, °C** | | | | |
| at 455 KPa | >195 | 215 | 223 | >200 |
| at 1820 KPa | 54 | 53 | 58 | 61 |
| **Sag, mm** | | | | |
| DAM | 0 | -- | -- | 2 |
| 50% RH | 0 | 0 | 0 | 0 |
| **Melt Viscosity, Pa at 280°C and** | | | | |
| 100/sec shear rate | 960 | 1250 | -- | 1000 |
| 1000/sec shear rate | 220 | 280 | -- | 220 |
| % water in sample | 0.1 | 0.008 | -- | 0.12 |

## TABLE I (Continued)

| Example Number | 21 | 22 | 23 | 24 |
|---|---|---|---|---|
| Ionomer | A | A | A | A |
| % Ionomer | 46.4 | 45 | 44.75 | 44.25 |
| Polyamide | A | A | B | B |
| % Polyamide | 42.1 | 41 | 44.75 | 44.25 |
| % Fiber Glass | 10 | 12 | 10 | 10 |
| Antioxidant | B | B | B | B |
| % Antioxidant | 0.5 | 0.5 | 0.5 | 0.5 |
| Other Ingredients | A | A | -- | A |
| % Other Ingredients | 1 | 1.5 | 0 | 1 |
| Rel. % Ionomer/ Rel % Polyamide | 52.4/47.6 | 52.3/47.7 | 50/50 | 50/50 |
| **Yield Strength, MPa** | | | | |
| DAM | 39.2 | 41.9 | 39.2 | 39.4 |
| 50% RH | 29.9 | 32.4 | -- | -- |
| **Elong. at Break, %** | | | | |
| DAM | 65 | 20 | 40 | 40 |
| 50% RH | 140 | 65 | -- | -- |
| **Notched Izod, J/m** | | | | |
| DAM at 23°C | 545(P) | 440(P) | 660(P) | 605(P) |
| 50% RH at 23°C | 640(P) | 460(P) | -- | -- |
| DAM at 0°C | -- | -- | -- | -- |
| 50% RH at 0°C | 370(P) | -- | -- | -- |
| DAM at -29°C | -- | 150(P) | -- | -- |
| 50% RH at -29°C | 140(P) | 70(M) | -- | -- |
| **Flexural Modulus, MPa** | | | | |
| DAM | 1440 | 1680 | 1200 | 1440 |
| 50% RH | 972 | 680 | -- | 841 |
| **HDT, °C** | | | | |
| at 455 KPa | -- | 198 | -- | -- |
| at 1820 KPa | -- | 60 | -- | -- |
| **Sag, mm** | | | | |
| DAM | 0 | 0 | -- | -- |
| 50% RH | 1 | 2 | -- | -- |
| **Melt Viscosity, Pa at 280°C and 100/sec shear** | | | | |
| rate | 780 | -- | 920 | 640 |
| 1000/sec shear rate | 180 | -- | 200 | 150 |
| % water in sample | 0.28 | -- | 0.49 | 0.45 |

## TABLE I (Continued)

| Example Number | 25 | 26 | 27 | 28 |
|---|---|---|---|---|
| Ionomer | A | A | A | A |
| % Ionomer | 45 | 45 | 47 | 46.6 |
| Polyamide | A;B | A;B | C | C |
| % Polyamide | 34.85; 10.00 | 24.85; 20.00 | 44.85 | 44.45 |
| % Fiber Glass | 10 | 10 | 8 | 8 |
| Antioxidant | A | A | B | B |
| % Antioxidant | 0.15 | 0.15 | 0.15 | 0.15 |
| Other Ingredients | -- | -- | -- | A |
| % Other Ingredients | 0 | 0 | 0 | 0.8 |
| Rel. % Ionomer/ Rel % Polyamide | 50.1/49.9 | 50.1/49.9 | 51.2/48.8 | 51.2/48.8 |
| **Yield Strength, MPa** | | | | |
| DAM | 47.2 | 45.9 | 41.3 | 41.6 |
| 50% RH | -- | -- | -- | -- |
| **Elong. at Break, %** | | | | |
| DAM | 30 | 30 | 43 | 30 |
| 50% RH | -- | -- | -- | -- |
| **Notched Izod, J/m** | | | | |
| DAM at 23°C | 515(P) | 550(P) | 810(P) | 695(P) |
| 50% RH at 23°C | -- | -- | -- | -- |
| DAM at 0°C | -- | -- | -- | -- |
| 50% RH at 0°C | -- | -- | -- | -- |
| DAM at -29°C | 235(P) | 225(P) | -- | -- |
| 50% RH at -29°C | -- | -- | -- | -- |
| **Flexural Modulus, MPa** | | | | |
| DAM | 1770 | 1680 | 1230 | 1300 |
| 50% RH | -- | -- | -- | -- |
| **HDT, °C** | | | | |
| at 455 KPa | 179 | 148 | -- | -- |
| at 1820 KPa | 68 | 50 | 47 | 49 |
| **Sag, mm** | | | | |
| DAM | -- | -- | 2 | 2 |
| 50% RH | -- | -- | -- | -- |
| **Melt Viscosity, Pa at 280°C and** | | | | |
| 100/sec shear rate | -- | -- | 2000 | 1500 |
| 1000/sec shear rate | -- | -- | 450 | 320 |
| % water in sample | -- | -- | 0.01 | 0.02 |

## TABLE I (Continued)

| Example Number | 29 | 30 | 31 | 32 |
|---|---|---|---|---|
| Ionomer | B | C | D | E |
| % Ionomer | 45.75 | 45.75 | 45.75 | 44.75 |
| Polyamide | A | A | A | A |
| % Polyamide | 43.75 | 43.75 | 43.75 | 44.75 |
| % Fiber Glass | 10 | 10 | 10 | 10 |
| Antioxidant | B | B | B | B |
| % Antioxidant | 0.5 | 0.5 | 0.5 | 0.5 |
| Other Ingredients | -- | -- | -- | -- |
| % Other Ingredients | 0 | 0 | 0 | 0 |
| Rel. % Ionomer/ Rel % Polyamide | 51.1/48.9 | 51.1/48.9 | 51.1/48.9 | 50/50 |
| **Yield Strength, MPa** | | | | |
| DAM | 46.3 | 39 | 46.3 | 45.6 |
| 50% RH | 33.9 | 29.9 | 34.8 | 30.8 |
| **Elong. at Break, %** | | | | |
| DAM | 20 | 55 | 20 | 23 |
| 50% RH | 50 | 120 | 60 | 82 |
| **Notched Izod, J/m** | | | | |
| DAM at 23°C | 415(P) | 550(P) | 405(P) | 330(P) |
| 50% RH at 23°C | 530(P) | 750(P) | 525(P) | 565(P) |
| DAM at 0°C | 190(P) | 310(P) | 255(P) | 165(M) |
| 50% RH at 0°C | 385(P) | 485(P) | 270(P) | 165(M) |
| DAM at -29°C | 85(M) | 170(P) | 155(M) | 115(C) |
| 50% RH at -29°C | 145(M) | 315(P) | 130(C) | 95(M) |
| **Flexural Modulus, MPa** | | | | |
| DAM | 1700 | 1380 | 1530 | 1570 |
| 50% RH | 1000 | 834 | 1010 | 993 |
| **HDT, °C** | | | | |
| at 455 KPa | 233 | 190 | 222 | 122 |
| at 1820 KPa | 74 | 65 | 70 | 68 |
| **Sag, mm** | | | | |
| DAM | 0 | 1 | 1 | 2 |
| 50% RH | 0 | 0 | 0 | 1 |
| **Melt Viscosity, Pa at 280°C and** | | | | |
| 100/sec shear rate | -- | -- | 1300 | 1300 |
| 1000/sec shear rate | -- | -- | 300 | 300 |
| % water in sample | -- | -- | 0.04 | 0.008 |

## TABLE I (Continued)

| Example Number | 33 | 34 | Comp. 1 | Comp. 2 |
|---|---|---|---|---|
| Ionomer | A | A | E | F |
| % Ionomer | 44.75 | 49.22 | 44.75 | 49.22 |
| Polyamide | A | A | A | A |
| % Polyamide | 44.75 | 40.28 | 44.75 | 40.28 |
| % Fiber Glass | 10 | 10 | 10 | 10 |
| Antioxidant | B | B | B | B |
| % Antioxidant | 0.5 | 0.5 | 0.5 | 0.5 |
| Other Ingredients | -- | -- | -- | -- |
| % Other Ingredients | 0 | 0 | 0 | 0 |
| Rel. % Ionomer/ Rel % Polyamide | 50/50 | 55/45 | 50/50 | 55/45 |
| **Yield Strength, MPa** | | | | |
| DAM | 51.1 | 42.5 | 72.4 | 63.4 |
| 50% RH | 34.8 | 53.1 | 52.7 | 47.8 |
| **Elong. at Break, %** | | | | |
| DAM | 23 | 33 | 5 | 7 |
| 50% RH | 43 | 22 | 16 | 14 |
| **Notched Izod, J/m** | | | | |
| DAM at 23°C | 480(P) | 610(P) | 235(P) | 320(P) |
| 50% RH at 23°C | 565(P) | 660(P) | 230(P) | 310(P) |
| DAM at 0°C | 315(P) | 395(P) | 205(P) | 265(P) |
| 50% RH at 0°C | 255(P) | 330(P) | 130(P) | 220(P) |
| DAM at −29°C | 190(P) | 225(P) | 140(C) | 185(P) |
| 50% RH at −29°C | 140(C) | 140(C) | 115(C) | 145(C) |
| **Flexural Modulus, MPa** | | | | |
| DAM | 1680 | 1280 | 2430 | 2190 |
| 50% RH | 1160 | 972 | 1900 | 1720 |
| **HDT, °C** | | | | |
| at 455 KPa | >228 | 174 | >230 | 124 |
| at 1820 KPa | 66 | 61 | 81 | 66 |
| **Sag, mm** | | | | |
| DAM | 1 | 3 | 0 | 2 |
| 50% RH | 2 | 2 | 0 | 2 |
| **Melt Viscosity, Pa at 280°C and** | | | | |
| 100/sec shear rate | 1800 | -- | 480 | -- |
| 1000/sec shear rate | 400 | -- | 180 | -- |
| % water in sample | 0.017 | -- | 0.007 | -- |

## TABLE I (Continued)

| Example Number | Comp. 3 | Comp. 4 |
|---|---|---|
| Ionomer | G | G |
| % Ionomer | 44.75 | 49.22 |
| Polyamide | A | A |
| % Polyamide | 44.75 | 40.28 |
| % Fiber Glass | 10 | 10 |
| Antioxidant | B | B |
| % Antioxidant | 0.5 | 0.5 |
| Other Ingredients | -- | -- |
| % Other Ingredients | 0 | 0 |
| Rel. % Ionomer/ Rel % Polyamide | 50/50 | 55/45 |
| | | |
| Yield Strength, MPa | | |
| DAM | 55.7 | 47.7 |
| 50% RH | 42.1 | 36.7 |
| | | |
| Elong. at Break, % | | |
| DAM | 14 | 30 |
| 50% RH | 34 | 47 |
| | | |
| Notched Izod, J/m | | |
| DAM at 23°C | 325(P) | 425(P) |
| 50% RH at 23°C | 365(P) | 450(P) |
| | | |
| DAM at 0°C | 225(P) | 270(P) |
| 50% RH at 0°C | 160(P) | 190(P) |
| | | |
| DAM at -29°C | 140(M) | 175(M) |
| 50% RH at -29°C | 105(C) | 130(C) |
| | | |
| Flexural Modulus, MPa | | |
| DAM | 1860 | 1500 |
| 50% RH | 1430 | 1190 |
| | | |
| HDT, °C | | |
| at 455 KPa | 212 | 91 |
| at 1820 KPa | 71 | 59 |
| | | |
| Sag, mm | | |
| DAM | 1 | 2 |
| 50% RH | 0 | 4 |
| | | |
| Melt Viscosity, Pa at 280°C and 100/sec shear rate | 1300 | -- |
| 1000/sec shear rate | 300 | -- |
| % water in sample | 0.013 | -- |

## TABLE I (Continued)

| Example Number | 35 | 36 | 37 |
|---|---|---|---|
| Ionomer | A | A | A |
| % Ionomer | 44.75 | 45 | 45 |
| Polyamide | D | A | A |
| % Polyamide | 44.75 | 46.5 | 43 |
| % Fiber Glass | 10 | 5 | 10 |
| Antioxidant | B | B | B |
| % Antioxidant | 0.5 | 0.5 | 0.5 |
| Other Ingredients | -- | B;C | B;C |
| % Other Ingredients | 0 | 1.0;2.0 | 1.0;0.5 |
| Rel. % Ionomer/ Rel % Polyamide | 50/50 | 49.2/50.8 | 51.1/48.9 |
| **Yield Strength, MPa** | | | |
| DAM | 51.1 | -- | 38.1 |
| 50% RH | 45.3 | 26.8 | -- |
| **Elong. at Break, %** | | | |
| DAM | 10 | 183 | 28 |
| 50% RH | 10 | 203 | -- |
| **Notched Izod, J/m** | | | |
| DAM at 23°C | 330(P) | 925(N) | 352(P) |
| 50% RH at 23°C | 290(P) | 960(N) | -- |
| DAM at 0°C | 235(P) | 300(M) | -- |
| 50% RH at 0°C | 160(P) | 205(M) | -- |
| DAM at -29°C | 155(C) | 175(C) | 123(M) |
| 50% RH at -29°C | 105(C) | 105(C) | -- |
| **Flexural Modulus, MPa** | | | |
| DAM | 1790 | 1170 | 1510 |
| 50% RH | 1560 | 790 | -- |
| **HDT, °C** | | | |
| at 455 KPa | 188 | 206 | 170 |
| at 1820 KPa | 80 | 54 | -- |
| **Sag, mm** | | | |
| DAM | 1 | 0 | -- |
| 50% RH | 0 | 0 | -- |
| **Melt Viscosity, Pa at 280°C and** | | | |
| 100/sec shear rate | -- | -- | -- |
| 1000/sec shear rate | -- | -- | -- |
| % water in sample | -- | -- | -- |

## Claims

1. A thermoplastic molding composition which comprises a melt blend of:

(a) at least one thermoplastic semi-crystalline polyamide having a melting point of at least 160°C,

(b) at least one ionic copolymer derived from the reaction of ethylene, at least one unsaturated carboxylic acid, and at least one softening comonomer, said softening comonomer being capable of forming a homopolymer that has a glass transition temperature of less than -40°C, said ionic copolymer being from 3-90% neutralized with a metal ion selected from groups la, lb, lla, llb, llla, lVa, Vlb and Vlll of the Periodic Table of the Elements, and

(c) glass fiber, where the weight ratio of component (b) to component (a) is from 0.9-1.3, and the quantity of component (c) is 2-20 weight percent of the total composition.

2. The composition of Claim 1 wherein the weight ratio of component (b) to component (a) is 0.95-1.15, preferably 1.0-1.1.

3. The composition of Claim 2 wherein the quantity of component (c) is 5-12, preferably 8-10 weight percent of the total composition.

4. The composition of Claim 1 wherein component (a) is selected from nylon 69, nylon 610, nylon 612, nylon 6, nylon 12 and blends thereof.

5. The composition of Claim 4 wherein component (a) is selected from nylon 66 and blends of nylon 66 and nylon 6.

6. The composition of Claim 1 wherein the unsaturated carboxylic acid in component (b) is a carboxylic acid of 3-8 carbon atoms which is preferably selected from acrylic acid and methacrylic acid and blends thereof, and methacrylic acid is especially preferred.

7. The composition of Claim 1 wherein the softening comonomer in component (b) is selected from alkyl esters of acrylic acid where the alkyl ester is selected from 2-ethoxyethyl, 2-ethylbutyl, 2-methoxyethyl, 3-ethoxypropyl, 3-methoxybutyl, 4-thiapentyl, 3-methoxypropyl, n-butyl, n-hexyl, n-heptyl and n-octyl acrylate, n-butyl acrylate being the preferred softening comonomer.

8. The composition of Claim 1 wherein the ionic copolymer component (b) contains 70-99.2, preferably 77-98.25, mole percent ethylene units, 0.35-12, preferably 1-9.5, mole percent carboxylic acid units, and 0.45-12, preferably 0.75-9.0, mole percent softening comonomer units.

9. The composition of Claim 8 wherein the ionic copolymer component (b) contains 81-96.8 mole percent ethylene units, 2-9 mole percent carboxylic acid units, and 1.2-7 mole percent softening comonomer units.

10. Shaped articles made from the composition of Claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 069 200  (ALLIED CORP.) <br> * Claims 1-3, 5-10 * & US-A-4 404 325 (Cat. D) <br> --- | 1-10 | C 08 L  77/00 <br> C 08 L  23/02 <br> C 08 L  23/08 <br> C 08 L  51/06 |
| A | GB-A-2 156 364  (CHISSO CORP.) <br> * Claims 1-5 * <br> --- | 1-10 | |
| A | US-A-4 310 638  (A.Y. CORAN et al.) <br> * Claims 1-12 * <br> --- | 1-10 | |
| A | PATENT ABSTRACTS OF JAPAN, vol. 6, no. 191 (C-127)[1069], 30th September 1982; & JP-A-57 102 948 (INOUE EMU TEE PII K.K.) 26-06-1982 <br> * Whole document * <br> ----- | 1-10 | |

TECHNICAL FIELDS
SEARCHED (Int. Cl.4)

C 08 L

The present search report has been drawn up for all claims

| Place of search | Date of completion of the search | Examiner |
|---|---|---|
| THE HAGUE | 21-04-1988 | GLANDDIER A. |